# EUROPEAN PATENT APPLICATION

(11) **EP 4 542 409 A1**
(43) Date of publication of application: **23.04.2025**
(21) Application number: 23845540.6
(22) Date of filing: 25.07.2023
(51) Int. Cl.: G06F 16/16

(54) **METADATA MANAGEMENT METHOD BASED ON FILE SYSTEM, AND RELATED DEVICE THEREOF**

(30) Priority: 25.07.2022 CN 202210877848; 28.10.2022 CN 202211336268
(71) Applicant: Huawei Cloud Computing Technologies Co., Ltd., Guiyang, Guizhou 550025 (CN)
(72) Inventor: YAO, Ting, Guiyang, Guizhou 550025 (CN); ZHANG, Yiwen, Wuhan, Hubei 430074 (CN); ZHU, Tingwei, Guiyang, Guizhou 550025 (CN); WANG, Daohui, Guiyang, Guizhou 550025 (CN)
(74) Representative: Isarpatent
(86) International application number: PCT/CN2023/109097
(87) International publication number: WO 2024/022330

(57) **Abstract**

This application discloses a file system-based metadata management method and a related device thereof. Obtaining of metadata of a plurality of files can be completed through only a few operations, without a large quantity of operations, so that operation costs of a file system can be reduced, and efficiency of metadata range querying can be improved. The method in this application includes: obtaining a metadata obtaining request for M files in a directory, where the metadata obtaining request includes an inode number of the directory, and M≥2; detecting whether a start address of a first non-volatile memory NVM area corresponding to the inode number of the directory exists, where the first NVM area is a contiguous memory area in an NVM; and if the start address of the first NVM area exists, obtaining M key-value pairs from the first NVM area based on the start address of the first NVM area, where an i^{th} key-value pair in the M key-value pairs includes the inode number of the directory and metadata of an i^{th} file, and i=1, ..., or M.

## Description

This application claims priorities to Chinese Patent Application No. 202210877848.7, filed with the China National Intellectual Property Administration on July 25, 2022 and entitled "FILE SYSTEM METADATA ACCESS METHOD", and Chinese Patent Application No. 202211336268.3, filed with the China National Intellectual Property Administration on October 28, 2022 and entitled "FILE SYSTEM-BASED METADATA MANAGEMENT METHOD AND RELATED DEVICE THEREOF", which are incorporated herein by reference in their entireties.

### TECHNICAL FIELD

Embodiments of this application relate to the field of computer technologies, and in particular, to a file system-based metadata management method and a related device thereof.

### BACKGROUND

A key-value (key-value, KV) storage system is widely used in fields such as a computer file system due to high performance and high scalability, strong scalability, an easy-to-use interface, and other advantages. In other words, the file system may manage metadata of files by using key-value pairs.

In a file system provided in a conventional technology, for any one of a plurality of files in a directory, a key-value pair of the file includes an inode (inode) number of the directory and metadata of the file (for example, a name of the file and a file attribute of the file). If metadata of a plurality of files in the directory needs to be obtained, the file system may obtain key-value pairs of the plurality of files based on the inode number of the directory. This is equivalent to obtaining the metadata of the plurality of files.

In the foregoing process, because the key-value pairs of the plurality of files are persistently stored in a plurality of storage areas of a hard disk, the file system needs to determine, one by one, a storage area in which a key-value pair of each file is located, and obtain the key-value pair of the file from the storage area. It can be learned that, the file system needs to perform a large quantity of operations when obtaining the metadata of the plurality of files. This results in low efficiency of metadata range querying.

### SUMMARY

Embodiments of this application provide a file system-based metadata management method and a related device thereof. Obtaining of metadata of a plurality of files can be completed through only a few operations, without a large quantity of operations, so that operation costs of a file system can be reduced, and efficiency of metadata range querying can be improved.

A first aspect of embodiments of this application provides a file system-based metadata management method, where a new file system configured to implement the method includes a DirTreeTable. The method includes the following steps:
After obtaining a metadata obtaining request for M files in a directory by parsing an operation of a user, the new file system may invoke the DirTreeTable in the system to process the metadata obtaining request. It should be noted that the metadata obtaining request usually includes an inode number of the directory. Therefore, the DirTreeTable may determine, based on the metadata obtaining request, that metadata of the M files in the directory needs to be obtained, where M is a positive integer greater than or equal to 2.

Because the metadata obtaining request includes the inode number of the directory, and two tables are set in the DirTreeTable, where the first table records a correspondence table between an inode number of a directory and a start address of a non-volatile memory (non-volatile memory, NVM) area, the DirTreeTable may detect, from the table, whether a start address of a first NVM area corresponding to the inode number of the directory exists, where the first NVM area may also be referred to as an NVM area corresponding to the directory, and is a contiguous memory area in the NVM.

If the start address of the first NVM area exists in the table, it indicates that the directory exists, and the DirTreeTable may read M key-value pairs from the first NVM area at a time based on the start address of the first NVM area. The M key-value pairs are in one-to-one correspondence with the M files in the directory, where an i^{th} key-value pair includes the inode number of the directory and metadata of an i^{th} file, and i=1, ..., or M. In this way, the DirTreeTable can successfully extract the metadata of the M files in the directory from the M key-value pairs, and return the metadata of the M files to the user for use.

It can be learned from the foregoing method that, after the new file system obtains the metadata obtaining request for the M files in the directory, because the metadata obtaining request includes the inode number of the directory, the new file system can detect whether the start address of the first NVM area corresponding to the inode number of the directory exists. If the start address of the first NVM area exists, the new file system obtains the M key-value pairs from the first NVM area based on the start address of the first NVM area, where the i^{th} key-value pair in the M key-value pairs includes the inode number of the directory and the metadata of the i^{th} file. In the foregoing process, because the first NVM area is a contiguous memory area in the NVM, and the first NVM area stores the M key-value pairs that are in one-to-one correspondence with the M files, the new file system can read the M key-value pairs from the first NVM area at a time, to successfully obtain the metadata of the M files. It can be learned that, the new file system provided in this application can complete obtaining of the metadata of the M files through only a few operations, without a large quantity of operations, so that operation costs of the file system can be reduced, and efficiency of metadata range querying can be improved.

In a possible implementation, in the i^{th} key-value pair, the metadata of the i^{th} file includes only a name of the i^{th} file and an inode number of the i^{th} file. It should be noted that, a key of the i^{th} key-value pair includes only the inode number of the directory and the name of the i^{th} file, and a value of the i^{th} key-value pair includes only the inode number of the i^{th} file.

In a possible implementation, the method further includes: obtaining a metadata addition request for an (M+1)^{th} file in the directory, where the metadata addition request includes an (M+1)^{th} key-value pair, and the (M+1)^{th} key-value pair includes the inode number of the directory, a name of the (M+1)^{th} file, and an inode number of the (M+1)^{th} file; detecting whether the start address of the first NVM area corresponding to the inode number of the directory exists; and if the start address of the first NVM area exists, persistently storing the (M+1)^{th} key-value pair in the first NVM area based on the start address of the first NVM area. In the foregoing implementation, after obtaining the metadata addition request for the (M+1)^{th} file in the directory by parsing an operation of a user, the new file system may invoke the DirTreeTable in the system to process the metadata addition request. It should be noted that, the metadata addition request usually includes the (M+1)^{th} key-value pair to be added, a key of the (M+1)^{th} key-value pair includes the inode number of the directory and the name of the (M+1)^{th} file, and a value of the (M+1)^{th} key-value pair includes the inode number of the (M+1)^{th} file. Then, the DirTreeTable may determine, based on the metadata addition request, that metadata of the (M+1)^{th} file in the directory needs to be additionally added. Because the metadata obtaining request includes the inode number of the directory, the DirTreeTable may detect, from the first table, whether the start address of the first NVM area corresponding to the inode number of the directory exists. If the start address of the first NVM area exists in the table, the DirTreeTable may persistently store the (M+1)^{th} key-value pair in the first NVM area based on the start address of the first NVM area. It may be understood that, in this case, the first NMV area stores M+1 key-value pairs, and the M+1 key-value pairs are in one-to-one correspondence with M+1 files in the directory. At this time, the metadata of the (M+1)^{th} file in the directory is successfully added to the DirTreeTable for subsequent query and use of the user.

In a possible implementation, the method further includes: if the start address of the first NVM area does not exist, obtaining a start address of a second NVM area provided by the NVM, where the second NVM area is a contiguous memory area in the NVM; and persistently storing the (M+1)^{th} key-value pair in the second NVM area based on the start address of the second NVM area, and constructing a correspondence between the inode number of the directory and the start address of the second NVM area. In the foregoing implementation, if the start address of the first NVM area does not exist in the table, the DirTreeTable sends an application request for a new NVM area to the NVM, and the NVM may delimit, based on the request, a new contiguous memory area for the DirTreeTable as a new NVM area corresponding to the directory, namely, the second NVM area, and send the start address of the second NVM area to the DirTreeTable. After obtaining the start address of the second NVM area, the DirTreeTable may persistently store the (M+1)^{th} key-value pair in the second NVM area based on the start address of the second NVM area. After persistently storing the (M+1)^{th} key-value pair in the second NVM area, the DirTreeTable may construct, in the first table, the correspondence between the inode number of the directory and the start address of the second NVM area. In this way, the DirTreeTable can subsequently find the second NVM area using the first table.

In a possible implementation, the first NVM area or the second NVM area includes a third NVM area, the third NVM area is for storing only the (M+1)^{th} key-value pair, and the method further includes: constructing a correspondence between a key of the (M+1)^{th} key-value pair and a start address of the third NVM area, where the key of the (M+1)^{th} key-value pair includes the inode number of the directory and the name of the (M+1)^{th} file. In the foregoing implementation, after persistently storing the (M+1)^{th} key-value pair in the first NMV area or the second NVM area, the DirTreeTable may obtain the start address of the third NVM area (to be specific, a part of the first NMV area or the second NVM area) that stores only the (M+1)^{th} key-value pair. The second table in the DirTreeTable records a correspondence between a key of a key-value pair and a start address of an NVM area. Therefore, the DirTreeTable may construct, in the second table, the correspondence between the key of the (M+1)^{th} key-value pair (including only the inode number of the directory and the name of the (M+1)^{th} file) and the start address of the third NVM area. In this way, the DirTreeTable can subsequently find the third NVM area using the second table.

In a possible implementation, the method further includes: obtaining a metadata obtaining request for the i^{th} file in the directory, where the metadata obtaining request includes a key of the i^{th} key-value pair, and the key of the i^{th} key-value pair includes the inode number of the directory and the name of the i^{th} file; detecting whether a start address of a fourth NVM area corresponding to the key of the i^{th} key-value pair exists, where the first NVM area includes the fourth NVM area; and if the start address of the fourth NVM area exists, obtaining the i^{th} key-value pair from the fourth NVM area based on the start address of the fourth NVM area. In the foregoing implementation, after obtaining the metadata obtaining request for the i^{th} file in the directory by parsing an operation of a user, the new file system may invoke the DirTreeTable in the system to process the metadata obtaining request. It should be noted that the metadata obtaining request usually includes the key of the i^{th} key-value pair. Therefore, the DirTreeTable may determine, based on the metadata obtaining request, that metadata of the i^{th} file in the directory needs to be obtained. Because the metadata obtaining request includes the key of the i^{th} key-value pair, the DirTreeTable can detect, in the second table, whether the start address of the fourth NVM area corresponding to the key of the i^{th} key-value pair exists, and if the start address of the fourth NVM area exists in the table, the DirTreeTable can read the i^{th} key-value pair from the fourth NVM area based on the start address of the fourth NVM area. Then, the DirTreeTable can successfully extract the metadata of the i^{th} file in the directory from the i^{th} key-value pair, and return the metadata of the i^{th} file to the user for use.

In a possible implementation, the method further includes: obtaining a metadata deletion request for the i^{th} file in the directory, where the metadata deletion request includes a key of the i^{th} key-value pair, and the key of the i^{th} key-value pair includes the inode number of the directory and the name of the i^{th} file; detecting whether a start address of a fourth NVM area corresponding to the key of the i^{th} key-value pair exists, where the first NVM area includes the fourth NVM area; and if the start address of the fourth NVM area exists, setting, based on the start address of the fourth NVM area, the i^{th} key-value pair stored in the fourth NVM area to invalid data that cannot be obtained. In the foregoing implementation, after obtaining the metadata deletion request for the i^{th} file in the directory by parsing an operation of a user, the new file system may invoke the DirTreeTable in the system to process the metadata deletion request. It should be noted that the metadata deletion request usually includes the key of the i^{th} key-value pair. Therefore, the DirTreeTable may determine, based on the metadata deletion request, that metadata of the i^{th} file in the directory needs to be deleted. Because the metadata obtaining request includes the key of the i^{th} key-value pair, the DirTreeTable can detect, in the second table, whether the start address of the fourth NVM area corresponding to the key of the i^{th} key-value pair exists, and if the start address of the fourth NVM area exists in the table, in the fourth NVM area, the DirTreeTable can mark the i^{th} key-value pair as invalid data that cannot be obtained.

A second aspect of embodiments of this application provides a file system-based metadata management apparatus. The apparatus includes: a first obtaining module, configured to obtain a metadata obtaining request for M files in a directory, where the metadata obtaining request includes an inode number of the directory, and M≥2; a first detection module, configured to detect whether a start address of a first non-volatile memory NVM area corresponding to the inode number of the directory exists, where the first NVM area is a contiguous memory area in an NVM; and a first processing module, configured to: if the start address of the first NVM area exists, obtain M key-value pairs from the first NVM area based on the start address of the first NVM area, where an i^{th} key-value pair in the M key-value pairs includes the inode number of the directory and metadata of an i^{th} file, and i=1, ..., or M.

It can be learned from the foregoing apparatus that, after the new file system obtains the metadata obtaining request for the M files in the directory, because the metadata obtaining request includes the inode number of the directory, the new file system can detect whether the start address of the first NVM area corresponding to the inode number of the directory exists. If the start address of the first NVM area exists, the new file system obtains the M key-value pairs from the first NVM area based on the start address of the first NVM area, where the i^{th} key-value pair in the M key-value pairs includes the inode number of the directory and the metadata of the i^{th} file. In the foregoing process, because the first NVM area is a contiguous memory area in the NVM, and the first NVM area stores the M key-value pairs that are in one-to-one correspondence with the M files, the new file system can read the M key-value pairs from the first NVM area storage at a time, to successfully obtain the metadata of the M files. It can be learned that, the new file system provided in this application can complete obtaining of the metadata of the M files through only a few operations, without a large quantity of operations, so that operation costs of the file system can be reduced, and efficiency of metadata range querying can be improved.

In a possible implementation, in the i^{th} key-value pair, the metadata of the i^{th} file includes only a name of the i^{th} file and an inode number of the i^{th} file.

In a possible implementation, the apparatus further includes: a second obtaining module, configured to obtain a metadata addition request for an (M+1)^{th} file in the directory, where the metadata addition request includes an (M+1)^{th} key-value pair, and the (M+1)^{th} key-value pair includes the inode number of the directory, a name of the (M+1)^{th} file, and an inode number of the (M+1)^{th} file; a second detection module, configured to detect whether the start address of the first NVM area corresponding to the inode number of the directory exists; and a second processing module, configured to: if the start address of the first NVM area exists, persistently store the (M+1)^{th} key-value pair in the first NVM area based on the start address of the first NVM area.

In a possible implementation, the apparatus further includes a third processing module, configured to: if the start address of the first NVM area does not exist, obtain a start address of a second NVM area provided by the NVM, where the second NVM area is a contiguous memory area in the NVM; and persistently store the (M+1)^{th} key-value pair in the second NVM area based on the start address of the second NVM area, and construct a correspondence between the inode number of the directory and the start address of the second NVM area.

In a possible implementation, the first NVM area or the second NVM area includes a third NVM area, the third NVM area is for storing only the (M+1)^{th} key-value pair, and the apparatus further includes a fourth processing module, configured to construct a correspondence between a key of the (M+1)^{th} key-value pair and a start address of the third NVM area, where the key of the (M+1)^{th} key-value pair includes the inode number of the directory and the name of the (M+1)^{th} file.

In a possible implementation, the apparatus further includes: a third obtaining module, configured to obtain a metadata obtaining request for the i^{th} file in the directory, where the metadata obtaining request includes a key of the i^{th} key-value pair, and the key of the i^{th} key-value pair includes the inode number of the directory and the name of the i^{th} file; a third detection module, configured to detect whether a start address of a fourth NVM area corresponding to the key of the i^{th} key-value pair exists, where the first NVM area includes the fourth NVM area; and a fifth processing module, configured to: if the start address of the fourth NVM area exists, obtain the i^{th} key-value pair from the fourth NVM area based on the start address of the fourth NVM area.

In a possible implementation, the apparatus further includes: a fourth obtaining module, configured to obtain a metadata deletion request for the i^{th} file in the directory, where the metadata deletion request includes a key of the i^{th} key-value pair, and the key of the i^{th} key-value pair includes the inode number of the directory and the name of the i^{th} file; a fourth detection module, configured to detect whether a start address of a fourth NVM area corresponding to the key of the i^{th} key-value pair exists, where the first NVM area includes the fourth NVM area; and a sixth processing module, configured to: if the start address of the fourth NVM area exists, set, based on the start address of the fourth NVM area, the i^{th} key-value pair stored in the fourth NVM area to invalid data that cannot be obtained.

A third aspect of embodiments of this application provides a file system metadata management apparatus. The apparatus includes a memory and a processor. The memory stores code, and the processor is configured to execute the code. When the code is executed, the apparatus performs the method according to any one of the first aspect or the possible implementations of the first aspect.

A fourth aspect of embodiments of this application provides a computer storage medium. The computer storage medium stores one or more instructions. When the instructions are executed by one or more computers, the one or more computers are enabled to perform the method according to any one of the first aspect or the possible implementations of the first aspect.

A fifth aspect of embodiments of this application provides a computer program product. The computer program product stores instructions, and when the instructions are executed by a computer, the computer is enabled to perform the method according to any one of the first aspect or the possible implementations of the first aspect.

In embodiments of this application, after the new file system obtains the metadata obtaining request for the M files in the directory, because the metadata obtaining request includes the inode number of the directory, the new file system can detect whether the start address of the first NVM area corresponding to the inode number of the directory exists. If the start address of the first NVM area exists, the new file system obtains the M key-value pairs from the first NVM area based on the start address of the first NVM area, where the i^{th} key-value pair in the M key-value pairs includes the inode number of the directory and the metadata of the i^{th} file. In the foregoing process, because the first NVM area is a contiguous memory area in the NVM, and the first NVM area stores the M key-value pairs that are in one-to-one correspondence with the M files, the new file system can read the M key-value pairs from the first NVM area storage at a time, to successfully obtain the metadata of the M files. It can be learned that, the new file system provided in this application can complete obtaining of the metadata of the M files through only a few operations, without a large quantity of operations, so that operation costs of the file system can be reduced, and efficiency of metadata range querying can be improved.

### BRIEF DESCRIPTION OF DRAWINGS

FIG. 1 is a diagram of a structure of user equipment according to an embodiment of this application;
FIG. 2 is a schematic flowchart of a file system-based metadata management method according to an embodiment of this application;
FIG. 3 is a diagram of an application example of a metadata obtaining process according to an embodiment of this application;
FIG. 4 is another schematic flowchart of a file system-based metadata management method according to an embodiment of this application;
FIG. 5a is a diagram of an application example of a metadata addition process according to an embodiment of this application;
FIG. 5b is another diagram of an application example of a metadata addition process according to an embodiment of this application;
FIG. 6 is another schematic flowchart of a file system-based metadata management method according to an embodiment of this application;
FIG. 7 is another diagram of an application example of a metadata obtaining process according to an embodiment of this application;
FIG. 8 is another schematic flowchart of a file system-based metadata management method according to an embodiment of this application;
FIG. 9 is another diagram of an application example of a metadata obtaining process according to an embodiment of this application;
FIG. 10 is a diagram of a structure of a file system-based metadata management apparatus according to an embodiment of this application; and
FIG. 11 is another diagram of a structure of a file system-based metadata management apparatus according to an embodiment of this application.

### DESCRIPTION OF EMBODIMENTS

Embodiments of this application provide a file system-based metadata management method and a related device thereof. Obtaining of metadata of a plurality of files can be completed through only a few operations, without a large quantity of operations, so that operation costs of a file system can be reduced, and efficiency of metadata range querying can be improved.

In the specification, claims, and accompanying drawings of this application, the terms "first", "second", and the like are intended to distinguish between similar objects, but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

A key-value storage system is widely used in fields such as a computer file system due to high performance and high scalability, strong scalability, an easy-to-use interface, and other advantages. In other words, the file system may manage metadata of files by using key-value pairs.

In a file system provided in a conventional technology, for any one of a plurality of files in a directory, a key-value pair of the file includes an inode number of the directory and metadata of the file (for example, a name of the file and a file attribute of the file (such as an inode number of the file, a size of the file, a modification date of the file, and an access permission of the file)). If metadata of the plurality of files in the directory needs to be obtained (in other words, metadata range querying needs to be performed), the file system may obtain key-value pairs of the plurality of files based on the inode number of the directory. This is equivalent to obtaining the metadata of the plurality of files.

In the foregoing process, because the key-value pairs of the plurality of files are persistently stored in a plurality of storage areas of a hard disk, the file system needs to determine, one by one, a storage area in which a key-value pair of each file is located, and obtain the key-value pair of the file from the storage area. It can be learned that, the file system needs to perform a large quantity of operations when obtaining the metadata of the plurality of files. This results in low efficiency of metadata range querying.

Further, in the file system provided in the conventional technology, if a name of a file needs to be modified, the file system needs to delete an original key-value pair of the file (including an original name of the file), and add a new key-value pair of the file (including a new name of the file). In this process, rewriting of a file attribute of the file is involved, but the file attribute of the file does not change. It can be learned that, the file system performs a redundant operation, and this results in low efficiency of changing the file name.

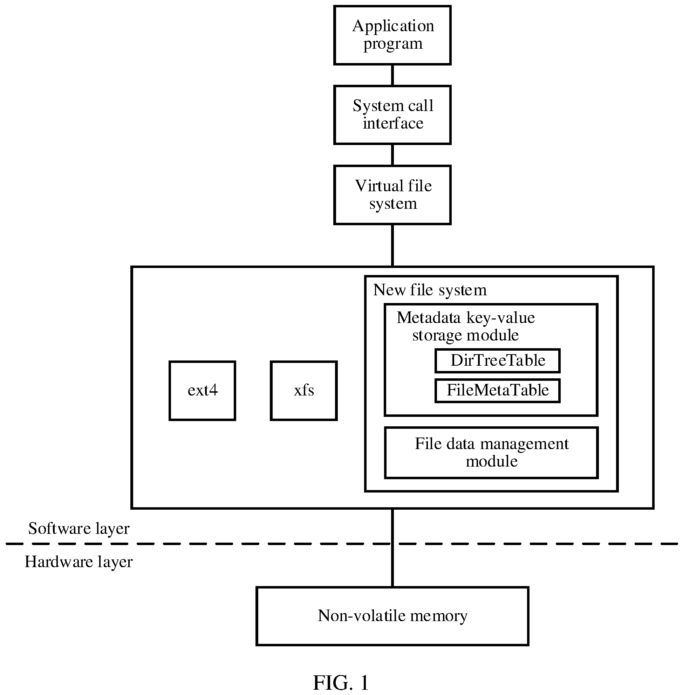

To resolve the foregoing problem, embodiments of this application provide a new file system. The file system may be deployed in various types of user equipment, for example, a personal computer, a server, and an intelligent terminal. FIG. 1 is a diagram of a structure of user equipment according to an embodiment of this application. As shown in FIG. 1, the user equipment includes a software layer and a hardware layer. The software layer includes an application program and an operating system, and the hardware layer includes a non-volatile memory (non-volatile memory, NVM), which may also be referred to as a persistent memory (persistent memory, PM). The operating system (for example, a Linux system) may include a system call interface of a file system, a virtual file system (virtual file system, VFS), and a plurality of file systems. The plurality of file systems include a conventional file system (for example, ext4 or xfs) and a new file system provided in embodiments of this application.

When a user initiates, by using an application program, operations on a file in a directory, for example, adding a file to the directory, deleting a file from the directory, modifying a file in the directory (for example, renaming the file or modifying content of the file), obtaining basic information of a plurality of files in the directory (for example, obtaining names of the plurality of files in batches), and obtaining a file attribute or content of a file in the directory, these user operations may be sequentially transmitted to the new file system (it is clear that, these user operations may alternatively be sequentially transmitted to the conventional file system, which is not described herein) through the system call interface and the VFS. The new file system may parse these user operations into a metadata management request and a data management request for a file or some files in the directory, and process these requests correspondingly, to manage metadata and data of these files.

The new file system includes two modules. The first module is a metadata key-value storage module, and the second module is a file data management module. The metadata key-value storage module may manage metadata of files based on the metadata management request for a file or some files in the directory, and the file data management module may manage data of files based on the data management request for a file or some files in the directory (this not described herein). For example, the metadata key-value storage module may obtain metadata of a plurality of files in a directory based on a metadata obtaining request for the plurality of files. For another example, the metadata key-value storage module may add metadata of a file in a directory based on a metadata addition request for the file. For still another example, the metadata key-value storage module may obtain metadata of a file in a directory based on a metadata obtaining request for the file. For yet another example, the metadata key-value storage module may delete metadata of a file in a directory based on a metadata deletion request for the file.

The metadata key-value storage module includes two table units: The first table unit is a DirTreeTable, and the second table unit is a FileMetaTable. Generally, in embodiments of this application, metadata of a file usually includes a name of the file, an inode number of the file, a file attribute of the file, and the like. The DirTreeTable may manage metadata such as the name of the file and the inode number of the file in a hash addressing manner. The FileMetaTable may also manage metadata such as the file attribute of the file in the hash addressing manner. The metadata of the file managed by the two tables is presented in a form of key-value pairs. A key of a key-value pair managed by the DirTreeTable is an inode number of a directory and the name of the file, and a value of the key is the inode number of the file. A key of a key-value pair managed by the FileMetaTable is the inode number of the file, and a value of the key is the file attribute of the file.

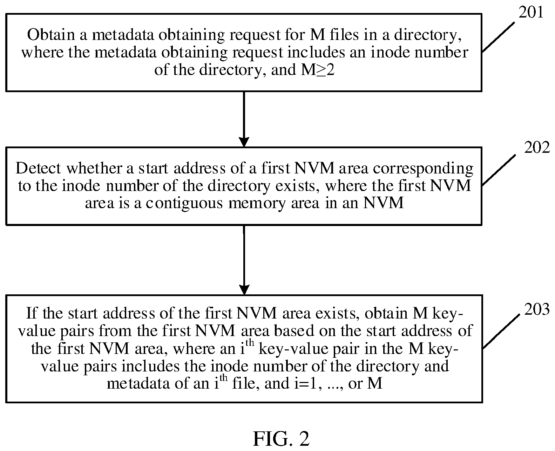

To further understand a working process of the foregoing new file system, the following further describes the working process. It is assumed that a directory includes M files (M is a positive integer greater than or equal to 2), and a user initiates an operation on a file or some files in the directory. The operation is parsed by the new file system into a metadata management request for the file or some files in the directory. The following uses an example in which the metadata management request is a metadata obtaining request for the M files in the directory for description. FIG. 2 is a schematic flowchart of a file system-based metadata management method according to an embodiment of this application. As shown in FIG. 2, the method includes the following steps:
201: Obtain a metadata obtaining request for M files in a directory, where the metadata obtaining request includes an inode number of the directory, and M≥2.

In this embodiment, after obtaining the metadata obtaining request for the M files in the directory by parsing an operation of a user, a new file system may invoke a DirTreeTable in the system to process the metadata obtaining request. It should be noted that the metadata obtaining request usually includes the inode number of the directory. Therefore, the DirTreeTable may determine, based on the metadata obtaining request, that metadata of the M files in the directory needs to be obtained.

For example, it is assumed that an inode number of a root directory is 1, the root directory includes five files, and a user performs a readdir operation on the root directory, where the operation indicates that the user needs to obtain names of all files in the root directory. In this case, the file system may parse the readdir operation into a get(1) request and invoke the DirTreeTable to process the request. The DirTreeTable may determine, based on the request, that metadata such as the names of all the files in the root directory needs to be obtained.

202: Detect whether a start address of a first NVM area corresponding to the inode number of the directory exists, where the first NVM area is a contiguous memory area in an NVM.

Because the metadata obtaining request includes the inode number of the directory, the DirTreeTable can parse the metadata obtaining request to obtain the inode number of the directory. Then, the DirTreeTable may perform hash calculation on the inode number of the directory, to obtain a hash value of the directory. It should be noted that two hash tables are set in the DirTreeTable, where the first hash table is a directory hash, and records a correspondence between a hash value of the directory and a start address of an NVM area. Therefore, the DirTreeTable may detect, from the directory hash, whether the start address of the first NVM area (which may also be understood as an NVM area corresponding to the directory, and is a contiguous memory area in the NVM) corresponding to the hash value of the directory exists. If the start address of the first NVM area exists in the directory hash, step 203 is performed; or if the start address of the first NVM area does not exist in the directory hash, a failure is returned.

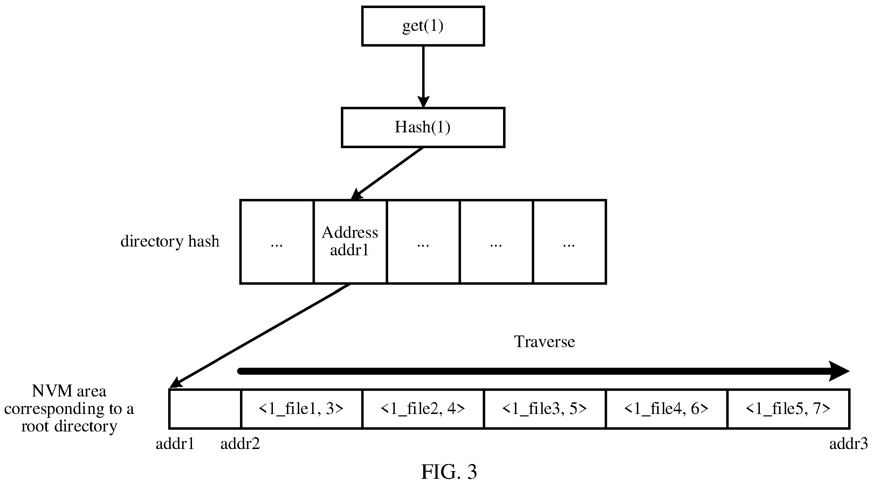

The foregoing example is still used. As shown in FIG. 3 (FIG. 3 is a diagram of an application example of a metadata obtaining process according to an embodiment of this application), after receiving the get(1) request, because the request includes the inode number "1" of the root directory, the DirTreeTable may perform calculation on "1", to obtain a hash value Hash(1) of the root directory. In this case, the DirTreeTable may obtain, in the directory hash in an index manner, a data block corresponding to the hash value. If the data block does not store any data, it indicates that the root directory does not exist (in other words, an NVM area corresponding to the root directory does not exist), and a failure is returned; or if the data block stores a start address of an NVM area corresponding to the root directory, it indicates that the root directory exists (in other words, the NVM area corresponding to the root directory exists), and the start address, namely, an address addr1, of the NVM area corresponding to the root directory is read.

203: If the start address of the first NVM area exists, obtain M key-value pairs from the first NVM area based on the start address of the first NVM area, where an i^{th} key-value pair in the M key-value pairs includes the inode number of the directory and metadata of an i^{th} file, and i=1, ..., or M.

If the start address of the first NVM area exists in the directory hash, it indicates that the directory exists, and the DirTreeTable may find the first NVM area in the NVM based on the start address of the first NVM area, and read the M key-value pairs from the first NVM area at a time. The M key-value pairs are in one-to-one correspondence with the M files in the directory, where the i^{th} key-value pair includes the inode number of the directory and the metadata of the i^{th} file (including only a name of the i^{th} file and an inode number of the i^{th} file), and i=1, ..., or M. Then, the DirTreeTable can successfully extract the metadata of the M files in the directory from the M key-value pairs, and return the metadata of the M files to the user for use.

The foregoing example is still used. The DirTreeTable may find, from the NVM based on the address addr1, the NVM area corresponding to the root directory, and start to traverse the NVM area corresponding to the root directory. In this case, in the NVM area corresponding to the root directory, the DirTreeTable may read, from an NVM area part from the address addr1 to an address addr2, metadata (including a start write address and a write offset address, namely, the address addr2 and an address addr3) of the NVM area corresponding to the root directory, and the DirTreeTable may read the first KV pair <1_file1, 3>, the second KV pair <1_file2, 4>, the third KV pair < 1_file3, 5>, the fourth KV pair <1_file4, 6>, and the fifth KV pair <1_file5, 7> from an NVM area part from the address addr2 to the address addr3. In this way, the DirTreeTable can extract names of the five files, to be specific, "file1, file2, file3, file4, file5", in the root directory from the five KV pairs, and return the names to the user. "3" is an inode number of the file1, ..., and "7" is an inode number of the file5.

In this embodiment of this application, after the new file system obtains the metadata obtaining request for the M files in the directory, because the metadata obtaining request includes the inode number of the directory, the new file system can detect whether the start address of the first NVM area corresponding to the inode number of the directory exists. If the start address of the first NVM area exists, the new file system obtains the M key-value pairs from the first NVM area based on the start address of the first NVM area, where the i^{th} key-value pair in the M key-value pairs includes the inode number of the directory and the metadata of the i^{th} file. In the foregoing process, because the first NVM area is a contiguous memory area in the NVM, and the first NVM area stores the M key-value pairs that are in one-to-one correspondence with the M files, the new file system can read the M key-value pairs from the first NVM area storage at a time, to successfully obtain the metadata of the M files. It can be learned that, the new file system provided in this application can complete obtaining of the metadata of the M files through only a few operations, without a large quantity of operations, so that operation costs of the file system can be reduced, and efficiency of metadata range querying can be improved.

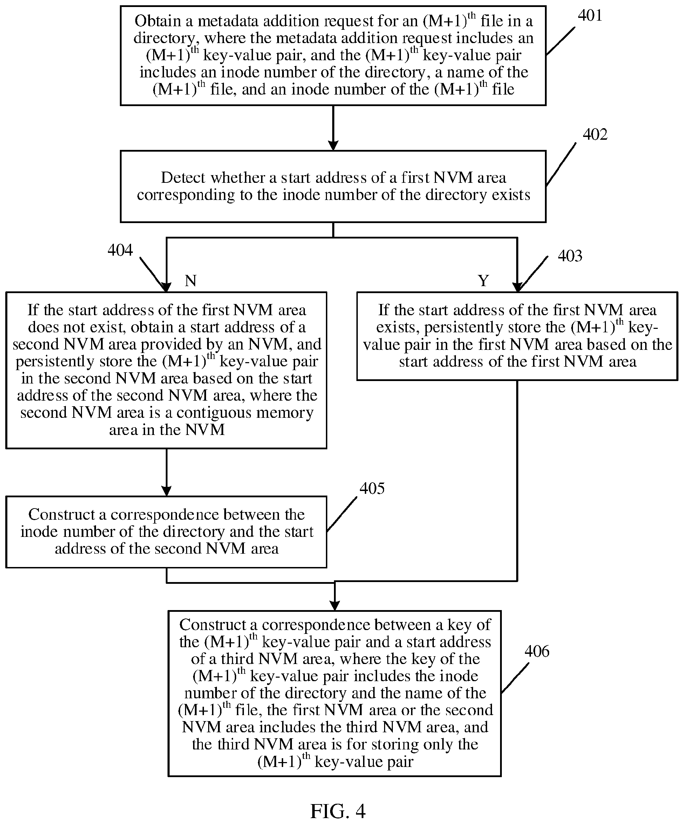

The following uses an example in which the metadata management request is a metadata addition request for an (M+1)^{th} file in the directory for description. FIG. 4 is another schematic flowchart of a file system-based metadata management method according to an embodiment of this application. As shown in FIG. 4, the method includes the following steps:
401: Obtain a metadata addition request for an (M+1)^{th} file in a directory, where the metadata addition request includes an (M+1)^{th} key-value pair, and the (M+1)^{th} key-value pair includes an inode number of the directory, a name of the (M+1)^{th} file, and an inode number of the (M+1)^{th} file.

In this embodiment, after obtaining the metadata addition request for the (M+1)^{th} file in the directory (in other words, a new file in the directory) by parsing an operation of a user, a new file system may invoke a DirTreeTable in the system to process the metadata addition request. It should be noted that, the metadata addition request usually includes the (M+1)^{th} key-value pair to be added, a key of the (M+1)^{th} key-value pair includes the inode number of the directory and the name of the (M+1)^{th} file, and a value of the (M+1)^{th} key-value pair includes the inode number of the (M+1)^{th} file. Then, the DirTreeTable may determine, based on the metadata addition request, that metadata of the (M+1)^{th} file in the directory needs to be additionally added.

For example, it is assumed that an inode number of a root directory is 1, the root directory originally includes five files, and the user adds a file with a name of "file6" and an inode number of "8" to the root directory, where the addition operation indicates that the user needs to additionally add the file file6 to the root directory. In this case, the file system may parse the file addition operation into a put(1_file6, 8) request and invoke the DirTreeTable to process the request. The DirTreeTable may determine, based on the request, that metadata such as the name and the inode number of the file file6 in the root directory needs to be added.

402: Detect whether a start address of a first NVM area corresponding to the inode number of the directory exists.

Because the metadata obtaining request includes the inode number of the directory, the DirTreeTable can parse the metadata obtaining request to obtain the inode number of the directory. Then, the DirTreeTable may perform hash calculation on the inode number of the directory, to obtain a hash value of the directory. It should be noted that two hash tables are set in the DirTreeTable, where the first hash table is a directory hash, and records a correspondence between a hash value of the directory and a start address of an NVM area. Therefore, the DirTreeTable may detect, from the directory hash, whether the start address of the first NVM area corresponding to the hash value of the directory exists. If the start address of the first NVM area exists in the directory hash, step 403 is performed; or if the start address of the first NVM area does not exist in the directory hash, step 404 is performed.

The foregoing example is still used. After receiving the put(1_file6, 8) request, because the request includes the inode number "1" of the root directory, the DirTreeTable may perform calculation on "1", to obtain a hash value Hash(1) of the root directory. In this case, the DirTreeTable may obtain, in the directory hash in an index manner, a data block corresponding to the hash value. If the data block does not store any data, it indicates that the root directory does not exist (for example, the entire root directory has been deleted before the user performs an operation), and an application request (which is not expanded herein) for a new NVM area is sent to the NVM; or if the data block stores a start address of an NVM area corresponding to the root directory, it indicates that the root directory exists, and the start address, namely, an address addr1, of the NVM area corresponding to the root directory is read.

403: If the start address of the first NVM area exists, persistently store the (M+1)^{th} key-value pair in the first NVM area based on the start address of the first NVM area.

If the start address of the first NVM area exists in the directory hash, it indicates that the directory exists (in other words, the first NVM area exists). The DirTreeTable may find the first NVM area in the NVM based on the start address of the first NVM area, and persistently store the (M+1)^{th} key-value pair in the first NVM area. It may be understood that, in this case, the first NMV area stores M+1 key-value pairs, and the M+1 key-value pairs are in one-to-one correspondence with M+1 files in the directory. At this time, the metadata of the (M+1)^{th} file in the directory is successfully added to the DirTreeTable for subsequent query and use of the user.

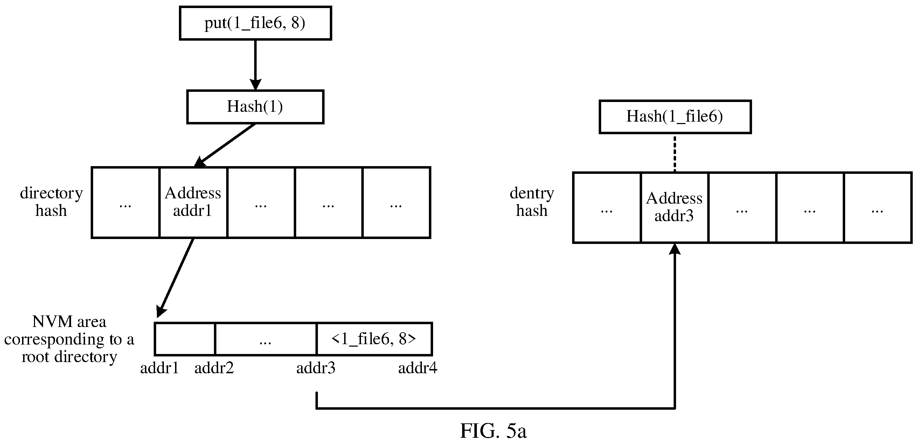

The foregoing example is still used. As shown in FIG. 5a (FIG. 5a is a diagram of an application example of a metadata addition process according to an embodiment of this application), the DirTreeTable may find, from the NVM based on the address addr1, the NVM area corresponding to the root directory, and obtain a write offset address, namely, an address addr3, from the NVM area corresponding to the root directory. Then, in the NVM area corresponding to the root directory, the DirTreeTable may write the sixth KV pair <1_file6, 8> into an NVM area part from the address addr3 to an address addr4, and update the write offset address from the address addr3 to the address addr4.

404: If the start address of the first NVM area does not exist, obtain a start address of a second NVM area provided by the NVM, and persistently store the (M+1)^{th} key-value pair in the second NVM area based on the start address of the second NVM area, where the second NVM area is a contiguous memory area in the NVM.

If the start address of the first NVM area does not exist in the directory hash, it indicates that the directory does not exist (in other words, the first NVM area does not exist). The DirTreeTable sends an application request for a new NVM area to the NVM, and the NVM may delimit, based on the request, a new contiguous memory area for the DirTreeTable as a new NVM area corresponding to the directory, namely, the second NVM area, and send the start address of the second NVM area to the DirTreeTable.

After obtaining the start address of the second NVM area, the DirTreeTable may find the second NVM area in the NVM based on the start address of the second NVM area, and persistently store the (M+1)^{th} key-value pair in the second NVM area. It may be understood that, in this case, the second NMV area stores only one key-value pair, and the key-value pair corresponds to the (M+1)^{th} file in the directory. At this time, the metadata of the (M+1)^{th} file in the directory is successfully added to the DirTreeTable for subsequent use of the user.

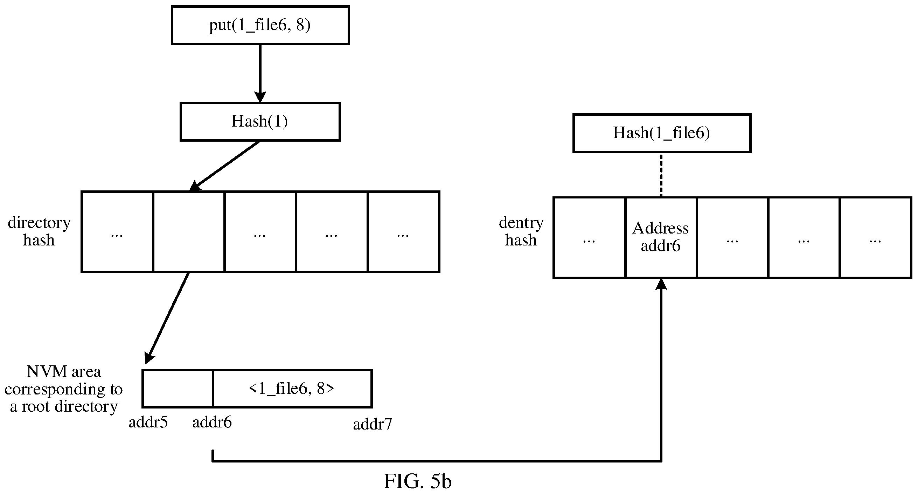

The foregoing example is still used. As shown in FIG. 5b (FIG. 5b is a diagram of another application embodiment of a metadata addition process according to an embodiment of this application), after the DirTreeTable sends an application request for a new NVM area to the NVM, the NVM may delimit a contiguous NVM area whose start address is an address addr5 as the NVM area corresponding to the root directory, where an NVM area part from the address addr5 to an address addr6 stores metadata (including a start write address and a write offset address, both being the address addr6) of the NVM area corresponding to the root directory.

Then, the NVM may return the start address (namely, the address addr5) of the NVM area corresponding to the root directory to the DirTreeTable. In this case, the DirTreeTable may find, from the NVM based on the address addr5, the NVM area corresponding to the root directory, and obtain the write offset address, namely, the address addr6, from the NVM area corresponding to the root directory. Then, in the NVM area corresponding to the root directory, the DirTreeTable may write the KV pair <1_file6, 8> into an NVM area part from the address addr6 to an address addr7, and update the write offset address from the address addr6 to the address addr7.

405: Construct a correspondence between the inode number of the directory and the start address of the second NVM area.

After persistently storing the (M+1)^{th} key-value pair in the second NVM area, the DirTreeTable may construct, in the directory hash, the correspondence between the hash value of the directory and the start address of the second NVM area. In this way, the DirTreeTable can subsequently find the second NVM area in a hash addressing manner.

The example shown in FIG. 5b is still used. The DirTreeTable may write, in the directory hash, the address addr6 into the data block corresponding to the hash value of the root directory. In this way, the directory hash records a correspondence between the hash value of the root directory and the start address of the NVM area corresponding to the root directory. Therefore, the DirTreeTable can subsequently find the NVM area corresponding to the root directory in the hash addressing manner.

406: Construct a correspondence between a key of the (M+1)^{th} key-value pair and a start address of a third NVM area, where the key of the (M+1)^{th} key-value pair includes the inode number of the directory and the name of the (M+1)^{th} file, the first NVM area or the second NVM area includes the third NVM area, and the third NVM area is for storing only the (M+1)^{th} key-value pair.

After persistently storing the (M+1)^{th} key-value pair in the first NMV area or the second NVM area, the DirTreeTable may obtain the start address of the third NVM area (to be specific, a part of the first NMV area or the second NVM area) that stores only the (M+1)^{th} key-value pair. The second hash table in the DirTreeTable is a dentry hash, and records a correspondence between a hash value of a file and a start address of an NVM area. Therefore, the DirTreeTable may perform calculation on the key of the (M+1)^{th} key-value pair (including only the inode number of the directory and the name of the (M+1)^{th} file) to obtain a hash value of the (M+1)^{th} file, and construct, in the dentry hash, a correspondence between the hash value of the (M+1)^{th} file and the start address of the third NVM area. In this way, the DirTreeTable can subsequently find the third NVM area in a hash addressing manner.

The example shown in FIG. 5a (or FIG. 5b) is still used. Because the NVM area part from the address addr3 to the address addr4 (or the NVM area part from the address addr6 to the address addr7) may be determined as the NVM area corresponding to the (M+1)^{th} file, the NVM area stores only <1_file6, 8>. In this case, the DirTreeTable performs calculation on "1_file6" to obtain the hash value Hash(1_file6) of the (M+1)^{th} file, finds, in an index manner, a data block corresponding to the hash value in the dentry hash, and writes the address addr3 (or the address addr6) into the data block. In this way, the dentry hash records a correspondence between the hash value of the (M+1)^{th} file and a start address of the NVM area corresponding to the (M+1)^{th} file. Therefore, the DirTreeTable can subsequently find the NVM area corresponding to the (M+1)^{th} file in the root directory in the hash addressing manner.

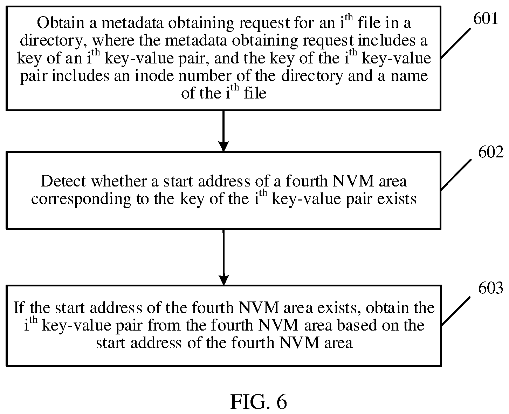

The following uses an example in which the metadata management request is a metadata obtaining request for an i^{th} file in the directory for description. FIG. 6 is another schematic flowchart of a file system-based metadata management method according to an embodiment of this application. As shown in FIG. 6, the method includes the following steps:
601: Obtain a metadata obtaining request for an i^{th} file in a directory, where the metadata obtaining request includes a key of an i^{th} key-value pair, and the key of the i^{th} key-value pair includes an inode number of a directory and a name of the i^{th} file.

In this embodiment, after obtaining the metadata obtaining request for the i^{th} file in the directory by parsing an operation of a user, a new file system may invoke a DirTreeTable in the system to process the metadata obtaining request. It should be noted that the metadata obtaining request usually includes the key of the i^{th} key-value pair (including the inode number of the directory and the name of the i^{th} file). Therefore, the DirTreeTable may determine, based on the metadata obtaining request, that metadata of the i^{th} file in the directory needs to be obtained.

For example, it is assumed that an inode number of a root directory is 1, the root directory includes five files, and the user queries a name and an inode number of a file file1 in the root directory, where the querying operation indicates that the user needs to obtain the name of the file file1 in the root directory. In this case, the file system may parse the operation into a get(1_file1) request and invoke the DirTreeTable to process the request. The DirTreeTable may determine, based on the request, that metadata such as the name and the inode number of the file file1 in the root directory needs to be obtained.

602: Detect whether a start address of a fourth NVM area corresponding to the key of the i^{th} key-value pair exists.

Because the metadata obtaining request includes the inode number of the directory and the name of the i^{th} file, the DirTreeTable can parse the metadata obtaining request to obtain the inode number of the directory and the name of the i^{th} file. Then, the DirTreeTable may perform hash calculation Hash(1_file1) on the inode number of the directory and the name of the i^{th} file, to obtain a hash value of the i^{th} file. In this case, the DirTreeTable may detect, from a dentry hash, whether the start address of the fourth NVM area corresponding to the hash value of the i^{th} file exists. If the start address of the fourth NVM area exists in the dentry hash, step 603 is performed; or if the start address of the fourth NVM area does not exist in the dentry hash, a failure is returned.

It should be noted that, the fourth NVM area may alternatively be understood as an NVM area related to the i^{th} file in the directory. It can be learned that the fourth NVM area is a part of the foregoing first NVM area (the NVM area related to the directory).

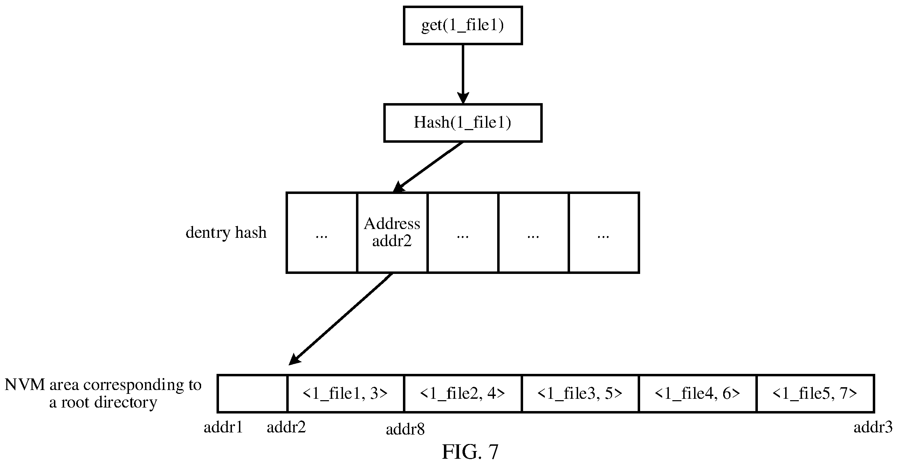

The foregoing example is still used. As shown in FIG. 7 (FIG. 7 is another diagram of an application example of a metadata obtaining process according to an embodiment of this application), after receiving the get(1_file1) request, because the request includes the inode number "1" of the root directory and the name "file1" of the file file1, the DirTreeTable may perform calculation on "1_file1", to obtain a hash value of the file file1. In this case, the DirTreeTable may obtain, in the dentry hash in an index manner, a data block corresponding to the hash value. If the data block does not store any data, it indicates that the file file1 does not exist (in other words, an NVM area corresponding to the file file1 does not exist), and a failure is returned; or if the data block stores a start address of an NVM area corresponding to the file file1, it indicates that the file file1 exists (in other words, the NVM area corresponding to the file file1 exists), and the start address, namely, an address addr2, of the NVM area corresponding to the file file1 is read.

603: If the start address of the fourth NVM area exists, obtain the i^{th} key-value pair from the fourth NVM area based on the start address of the fourth NVM area.

If the start address of the fourth NVM area exists in the dentry hash, it indicates that the i^{th} file in the directory exists, and the DirTreeTable may find the fourth NVM area in the NVM based on the start address of the fourth NVM area, and read the i^{th} key-value pair from the fourth NVM area, where the i^{th} key-value pair includes the inode number of the directory and the metadata of the i^{th} file (including only the name of the i^{th} file and an inode number of the i^{th} file). Then, the DirTreeTable can successfully extract the metadata of the i^{th} file in the directory from the i^{th} key-value pair, and return the metadata of the i^{th} file to the user for use.

The foregoing example is still used. The DirTreeTable may accurately find, from the NVM based on the address addr2, the NVM area corresponding to the file file1, to be specific, an NVM area part from the address addr2 to an address addr8, to read a KV pair < 1_file1, 3>. Then, the DirTreeTable can extract the name "file_1" of the file file1 and the inode number "3" of the file file1 from the KV pair, and return the name "file1" and the inode number "3" of the file file1 to the user.

In addition, based on the embodiment shown in FIG. 6, further extension may be made. To be specific, in some scenarios (for example, a user needs to query a file attribute of the i^{th} file), after step 603 is completed, the DirTreeTable obtains the name of the i^{th} file and the inode number of the i^{th} file, and does not return the name of the i^{th} file and the inode number of the i^{th} file to the user, but continues to invoke a FileMetaTable, so that the FileMetaTable obtains the file attribute of the i^{th} file based on the inode number of the i^{th} file (this process is similar to step 602 and step 603, and details are not described herein again), and returns the file attribute of the i^{th} file to the user for viewing and use.

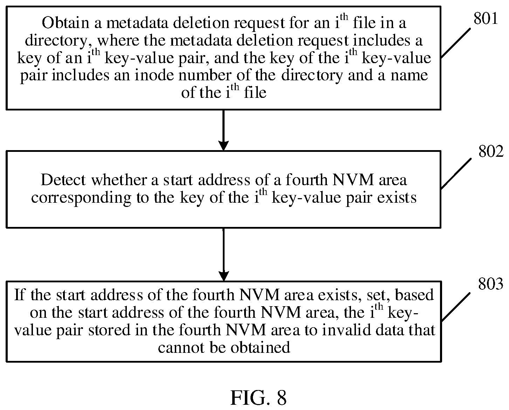

The following uses an example in which the metadata management request is a metadata deletion request for an i^{th} file in the directory for description. FIG. 8 is another schematic flowchart of a file system-based metadata management method according to an embodiment of this application. As shown in FIG. 8, the method includes the following steps:
801: Obtain a metadata deletion request for an i^{th} file in a directory, where the metadata deletion request includes a key of an i^{th} key-value pair, and the key of the i^{th} key-value pair includes an inode number of the directory and a name of the i^{th} file.

In this embodiment, after obtaining the metadata deletion request for the i^{th} file in the directory by parsing an operation of a user, a new file system may invoke a DirTreeTable in the system to process the metadata deletion request. It should be noted that the metadata deletion request usually includes the key of the i^{th} key-value pair (including the inode number of the directory and the name of the i^{th} file). Therefore, the DirTreeTable may determine, based on the metadata deletion request, that metadata of the i^{th} file in the directory needs to be deleted.

For example, it is assumed that an inode number of a root directory is 1, the root directory includes five files, and the user deletes a file file3 in the root directory, where the deletion operation indicates that the user needs to deletethe file file3 in the root directory. In this case, the file system may parse the operation into a delete(1_file3) request and invoke the DirTreeTable to process the request. The DirTreeTable may determine, based on the request, that metadata such as a name and an inode number of the file file3 in the root directory needs to be deleted.

802: Detect whether a start address of a fourth NVM area corresponding to the key of the i^{th} key-value pair exists.

Because the metadata obtaining request includes the inode number of the directory and the name of the i^{th} file, the DirTreeTable can parse the metadata obtaining request to obtain the inode number of the directory and the name of the i^{th} file. Then, the DirTreeTable may perform hash calculation on the inode number of the directory and the name of the i^{th} file, to obtain a hash value of the i^{th} file. In this case, the DirTreeTable may detect, from a dentry hash, whether the start address of the fourth NVM area corresponding to the hash value of the i^{th} file exists. If the start address of the fourth NVM area exists in the dentry hash, step 803 is performed; or if the start address of the fourth NVM area does not exist in the dentry hash, a failure is returned.

It should be noted that, the fourth NVM area may alternatively be understood as an NVM area related to the i^{th} file in the directory. It can be learned that the fourth NVM area is a part of the foregoing first NVM area (the NVM area related to the directory).

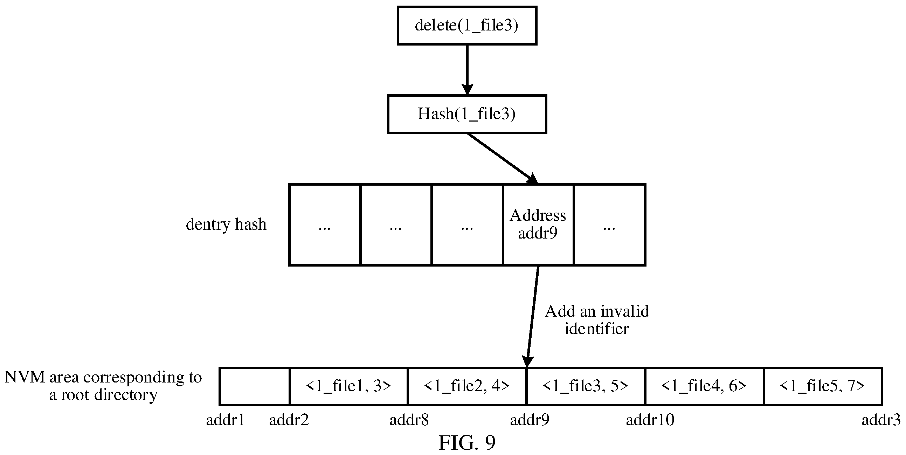

The foregoing example is still used. As shown in FIG. 9 (FIG. 9 is another diagram of an application example of a metadata obtaining process according to an embodiment of this application), after receiving the delete(1_file3) request, because the request includes the inode number "1" of the root directory and the name "file3" of the file file3, the DirTreeTable may perform calculation on "1_file3", to obtain a hash value of the file file3. In this case, the DirTreeTable may obtain, in the dentry hash in an index manner, a data block corresponding to the hash value. If the data block does not store any data, it indicates that the file file3 does not exist (in other words, an NVM area corresponding to the file file3 does not exist), and a failure is returned; or if the data block stores a start address of an NVM area corresponding to the file file3, it indicates that the file file3 exists (in other words, the NVM area corresponding to the file file3 exists), and the start address, namely, an address addr9, of the NVM area corresponding to the file file3 is read.

803: If the start address of the fourth NVM area exists, set, based on the start address of the fourth NVM area, the i^{th} key-value pair stored in the fourth NVM area to invalid data that cannot be obtained.

If the start address of the fourth NVM area exists in the dentry hash, it indicates that the i^{th} file in the directory exists, and the DirTreeTable may accurately find the fourth NVM area in the NVM based on the start address of the fourth NVM area, and mark, in the fourth NVM area, the i^{th} key-value pair as invalid data that cannot be obtained (for example, add an invalid identifier to the i^{th} key-value pair in the fourth NVM area, where in this case, if the DirTreeTable subsequently passes through the fourth NVM area again, because of existence of the invalid identifier, the DirTreeTable automatically skips reading of the i^{th} key-value pair, so that the i^{th} key-value pair is not obtained), where the i^{th} key-value pair includes the inode number of the directory and the metadata of the i^{th} file (including only the name of the i^{th} file and an inode number of the i^{th} file).

The foregoing example is still used. The DirTreeTable may find, from the NVM based on the address addr9, the NVM area corresponding to the file file3, to be specific, an NVM area part from the address addr9 to an address addr10. In the NVM area, an invalid identifier may be written into the DirTreeTable. Therefore, the NVM area stores a KV pair < 1_file3, 5> and the invalid identifier, indicating that the KV pair < 1_file3, 5> is invalid data. In this way, if the DirTreeTable passes through the NVM area again (regardless of whether the NVM area is accurately found or traversed), the KV pair <1_file3, 5> is automatically skipped, and is not read.

In the new file system provided in embodiments of this application, if a name of a file needs to be modified, the DirTreeTable may first delete an original key-value pair of the file (refer to the embodiment shown in FIG. 4), and then add a new key-value pair of the file (refer to the embodiment shown in FIG. 8). The original key-value pair of the file includes only an original name of the file and an inode number of the file, but does not include a file attribute of the file. Similarly, the new key-value pair of the file includes only a new name of the file and the inode number of the file, but does not include the file attribute of the file. Therefore, the file attribute of the file is not rewritten in this process. It can be learned that the file system does not perform a redundant operation, so that efficiency of modifying the file name is improved.

It should be noted that, in the new file system in the embodiments shown in FIG. 2, FIG. 4, FIG. 6, and FIG. 8, main units such as the DirTreeTable and the FileMetaTable are all stored in the NMV. It can be learned that, both the directory hash and the dentry hash in the DirTreeTable are stored in the NMV. In other words, hash addressing operations of the DirTreeTable for the directory hash and the dentry hash are implemented based on the NVM. Because a data amount of the directory hash is far less than that of the dentry hash, the directory hash may be stored in a dynamic random access memory (dynamic random access memory, DRAM). Therefore, the hash addressing operation of the DirTreeTable for the directory hash may be implemented in the DRAM (because a data read/write speed of the DRAM is higher than a data read/write speed of the NMV), and this helps improve a completion speed of these operations.

Further, both the directory hash and the dentry hash in the DirTreeTable may still be stored in the NMV, and data that has been accessed in the directory hash and the dentry hash is cached in a cache of the DRAM. In this case, each time the DirTreeTable needs to access the directory hash or the dentry hash, the DirTreeTable first accesses the cache of the DRAM to check whether the cache of the DRAM includes an address needed by the DirTreeTable. If the cache of the DRAM does not include the address needed by the DirTreeTable, the DirTreeTable accesses the directory hash and the dentry hash in the NMV. In this way, the operation completion speed can be improved, and occupation of DRAM space can be reduced.

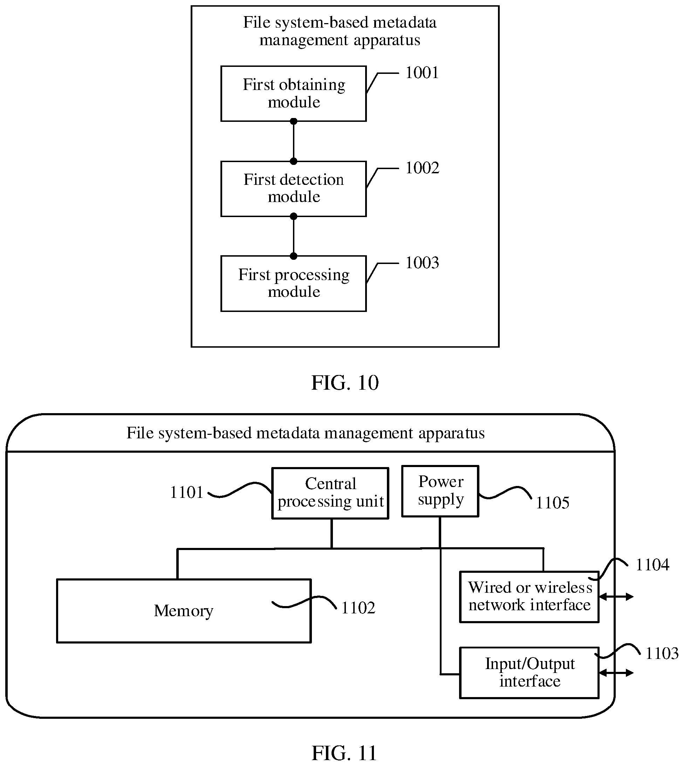

The foregoing describes the file system-based metadata management method provided in embodiments of this application. The following describes a file system-based metadata management apparatus provided in embodiments of this application. FIG. 10 is a diagram of a structure of a file system-based metadata management apparatus according to an embodiment of this application. As shown in FIG. 10, the apparatus includes:
a first obtaining module 1001, configured to obtain a metadata obtaining request for M files in a directory, where the metadata obtaining request includes an inode number of the directory, and M≥2;
a first detection module 1002, configured to detect whether a start address of a first non-volatile memory NVM area corresponding to the inode number of the directory exists, where the first NVM area is a contiguous memory area in an NVM; and
a first processing module 1003, configured to: if the start address of the first NVM area exists, obtain M key-value pairs from the first NVM area based on the start address of the first NVM area, where an i^{th} key-value pair in the M key-value pairs includes the inode number of the directory and metadata of an i^{th} file, and i=1, ..., or M.

In a possible implementation, in the i^{th} key-value pair, the metadata of the i^{th} file includes only a name of the i^{th} file and an inode number of the i^{th} file.

In a possible implementation, the apparatus further includes: a second obtaining module, configured to obtain a metadata addition request for an (M+1)^{th} file in the directory, where the metadata addition request includes an (M+1)^{th} key-value pair, and the (M+1)^{th} key-value pair includes the inode number of the directory, a name of the (M+1)^{th} file, and an inode number of the (M+1)^{th} file; a second detection module, configured to detect whether the start address of the first NVM area corresponding to the inode number of the directory exists; and a second processing module, configured to: if the start address of the first NVM area exists, persistently store the (M+1)^{th} key-value pair in the first NVM area based on the start address of the first NVM area.

In a possible implementation, the apparatus further includes a third processing module, configured to: if the start address of the first NVM area does not exist, obtain a start address of a second NVM area provided by the NVM, where the second NVM area is a contiguous memory area in the NVM; and persistently store the (M+1)^{th} key-value pair in the second NVM area based on the start address of the second NVM area, and construct a correspondence between the inode number of the directory and the start address of the second NVM area.

In a possible implementation, the first NVM area or the second NVM area includes a third NVM area, the third NVM area is for storing only the (M+1)^{th} key-value pair, and the apparatus further includes a fourth processing module, configured to construct a correspondence between a key of the (M+1)^{th} key-value pair and a start address of the third NVM area, where the key of the (M+1)^{th} key-value pair includes the inode number of the directory and the name of the (M+1)^{th} file.

In a possible implementation, the apparatus further includes: a third obtaining module, configured to obtain a metadata obtaining request for the i^{th} file in the directory, where the metadata obtaining request includes a key of the i^{th} key-value pair, and the key of the i^{th} key-value pair includes the inode number of the directory and the name of the i^{th} file; a third detection module, configured to detect whether a start address of a fourth NVM area corresponding to the key of the i^{th} key-value pair exists, where the first NVM area includes the fourth NVM area; and a fifth processing module, configured to: if the start address of the fourth NVM area exists, obtain the i^{th} key-value pair from the fourth NVM area based on the start address of the fourth NVM area.

In a possible implementation, the apparatus further includes: a fourth obtaining module, configured to obtain a metadata deletion request for the i^{th} file in the directory, where the metadata deletion request includes a key of the i^{th} key-value pair, and the key of the i^{th} key-value pair includes the inode number of the directory and the name of the i^{th} file; a fourth detection module, configured to detect whether a start address of a fourth NVM area corresponding to the key of the i^{th} key-value pair exists, where the first NVM area includes the fourth NVM area; and a sixth processing module, configured to: if the start address of the fourth NVM area exists, set, based on the start address of the fourth NVM area, the i^{th} key-value pair stored in the fourth NVM area to invalid data that cannot be obtained.

It should be noted that, content such as information exchange between the modules/units of the apparatuses and an execution process is based on the same concept as the method embodiments of this application, and produces the same technical effect as those of the method embodiments of this application. For specific content, refer to the foregoing descriptions in the method embodiments of this application. Details are not described herein again.

FIG. 11 is another diagram of a structure of a file system-based metadata management apparatus according to an embodiment of this application. As shown in FIG. 11, an embodiment of the file system-based metadata management apparatus may include one or more central processing units 1101, memories 1102, input/output interfaces 1103, wired or wireless network interfaces 1104, and power supplies 1105.

The memory 1102 may be used for temporary storage or permanent storage. Further, the central processing unit 1101 may be configured to communicate with the memory 1102, and execute, on the file system-based metadata management apparatus, a series of instruction operations in the memory 1102.

In this embodiment, the central processing unit 1101 may perform the method steps in the embodiment shown in FIG. 2, FIG. 4, FIG. 6, or FIG. 8, and details are not described herein again.

In this embodiment, division into specific functional modules in the central processing unit 1101 may be similar to division into the modules described in FIG. 10, and details are not described herein again.

Embodiments of this application further relate to a computer storage medium. The computer-readable storage medium stores a program for signal processing. When the program is run on a computer, the computer is enabled to perform the steps in the embodiment shown in FIG. 2, FIG. 4, FIG. 6, or FIG. 8.

Embodiments of this application further relate to a computer program product. The computer program product stores instructions. When the instructions are executed by a computer, the computer is enabled to perform the steps in the embodiment shown in FIG. 2, FIG. 4, FIG. 6, or FIG. 8.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A file system-based metadata management method, wherein the method comprises:
Obtaining a metadata obtaining request for M files in a directory, wherein the metadata obtaining request comprises an inode number of the directory, and M≥2;
detecting whether a start address of a first non-volatile memory NVM area corresponding to the inode number of the directory exists, wherein the first NVM area is a contiguous memory area in an NVM; and
if the start address of the first NVM area exists, obtaining M key-value pairs from the first NVM area based on the start address of the first NVM area, wherein an i^{th} key-value pair in the M key-value pairs comprises the inode number of the directory and metadata of an i^{th} file, and i=1, ..., or M.

2. The method according to claim 1, wherein in the i^{th} key-value pair, the metadata of the i^{th} file comprises only a name of the i^{th} file and an inode number of the i^{th} file.

3. The method according to claim 2, wherein the method further comprises:
obtaining a metadata addition request for an (M+1)^{th} file in the directory, wherein the metadata addition request comprises an (M+1)^{th} key-value pair, and the (M+1)^{th} key-value pair comprises the inode number of the directory, a name of the (M+1)^{th} file, and an inode number of the (M+1)^{th} file;
detecting whether the start address of the first NVM area corresponding to the inode number of the directory exists; and
if the start address of the first NVM area exists, persistently storing the (M+1)^{th} key-value pair in the first NVM area based on the start address of the first NVM area.

4. The method according to claim 3, wherein the method further comprises:
if the start address of the first NVM area does not exist, obtaining a start address of a second NVM area provided by the NVM, wherein the second NVM area is a contiguous memory area in the NVM; and
persistently storing the (M+1)^{th} key-value pair in the second NVM area based on the start address of the second NVM area, and constructing a correspondence between the inode number of the directory and the start address of the second NVM area.

5. The method according to claim 3 or 4, wherein the first NVM area or the second NVM area comprises a third NVM area, the third NVM area is for storing only the (M+1)^{th} key-value pair, and the method further comprises:
constructing a correspondence between a key of the (M+1)^{th} key-value pair and a start address of the third NVM area, wherein the key of the (M+1)^{th} key-value pair comprises the inode number of the directory and the name of the (M+1)^{th} file.

6. The method according to any one of claims 2 to 5, wherein the method further comprises:
obtaining a metadata obtaining request for the i^{th} file in the directory, wherein the metadata obtaining request comprises a key of the i^{th} key-value pair, and the key of the i^{th} key-value pair comprises the inode number of the directory and the name of the i^{th} file;
detecting whether a start address of a fourth NVM area corresponding to the key of the i^{th} key-value pair exists, wherein the first NVM area comprises the fourth NVM area; and
if the start address of the fourth NVM area exists, obtaining the i^{th} key-value pair from the fourth NVM area based on the start address of the fourth NVM area.

7. The method according to any one of claims 2 to 5, wherein the method further comprises:
obtaining a metadata deletion request for the i^{th} file in the directory, wherein the metadata deletion request comprises a key of the i^{th} key-value pair, and the key of the i^{th} key-value pair comprises the inode number of the directory and the name of the i^{th} file;
detecting whether a start address of a fourth NVM area corresponding to the key of the i^{th} key-value pair exists, wherein the first NVM area comprises the fourth NVM area; and
if the start address of the fourth NVM area exists, setting, based on the start address of the fourth NVM area, the i^{th} key-value pair stored in the fourth NVM area to invalid data that cannot be obtained.

8. A file system-based metadata management apparatus, wherein the apparatus comprises:
a first obtaining module, configured to obtain a metadata obtaining request for M files in a directory, wherein the metadata obtaining request comprises an inode number of the directory, and M≥2;
a first detection module, configured to detect whether a start address of a first non-volatile memory NVM area corresponding to the inode number of the directory exists, wherein the first NVM area is a contiguous memory area in an NVM; and
a first processing module, configured to: if the start address of the first NVM area exists, obtain M key-value pairs from the first NVM area based on the start address of the first NVM area, wherein an i^{th} key-value pair in the M key-value pairs comprises the inode number of the directory and metadata of an i^{th} file, and i=1, ..., or M.

9. The apparatus according to claim 8, wherein in the i^{th} key-value pair, the metadata of the i^{th} file comprises only a name of the i^{th} file and an inode number of the i^{th} file.

10. The apparatus according to claim 9, wherein the apparatus further comprises:
a second obtaining module, configured to obtain a metadata addition request for an (M+1)^{th} file in the directory, wherein the metadata addition request comprises an (M+1)^{th} key-value pair, and the (M+1)^{th} key-value pair comprises the inode number of the directory, a name of the (M+1)^{th} file, and an inode number of the (M+1)^{th} file;
a second detection module, configured to detect whether the start address of the first NVM area corresponding to the inode number of the directory exists; and
a second processing module, configured to: if the start address of the first NVM area exists, persistently store the (M+1)^{th} key-value pair in the first NVM area based on the start address of the first NVM area.

11. The apparatus according to claim 10, wherein the apparatus further comprises a third processing module, configured to:
if the start address of the first NVM area does not exist, obtain a start address of a second NVM area provided by the NVM, wherein the second NVM area is a contiguous memory area in the NVM; and
persistently store the (M+1)^{th} key-value pair in the second NVM area based on the start address of the second NVM area, and construct a correspondence between the inode number of the directory and the start address of the second NVM area.

12. The apparatus according to claim 10 or **11,** wherein the first NVM area or the second NVM area comprises a third NVM area, the third NVM area is for storing only the (M+1)^{th} key-value pair, and the apparatus further comprises a fourth processing module, configured to construct a correspondence between a key of the (M+1)^{th} key-value pair and a start address of the third NVM area, wherein the key of the (M+1)^{th} key-value pair comprises the inode number of the directory and the name of the (M+1)^{th} file.

13. The apparatus according to any one of claims 9 to 12, wherein the apparatus further comprises:
a third obtaining module, configured to obtain a metadata obtaining request for the i^{th} file in the directory, wherein the metadata obtaining request comprises a key of the i^{th} key-value pair, and the key of the i^{th} key-value pair comprises the inode number of the directory and the name of the i^{th} file;
a third detection module, configured to detect whether a start address of a fourth NVM area corresponding to the key of the i^{th} key-value pair exists, wherein the first NVM area comprises the fourth NVM area; and
a fifth processing module, configured to: if the start address of the fourth NVM area exists, obtain the i^{th} key-value pair from the fourth NVM area based on the start address of the fourth NVM area.

14. The apparatus according to any one of claims 9 to 12, wherein the apparatus further comprises:
a fourth obtaining module, configured to obtain a metadata deletion request for the i^{th} file in the directory, wherein the metadata deletion request comprises a key of the i^{th} key-value pair, and the key of the i^{th} key-value pair comprises the inode number of the directory and the name of the i^{th} file;
a fourth detection module, configured to detect whether a start address of a fourth NVM area corresponding to the key of the i^{th} key-value pair exists, wherein the first NVM area comprises the fourth NVM area; and
a sixth processing module, configured to: if the start address of the fourth NVM area exists, set, based on the start address of the fourth NVM area, the i^{th} key-value pair stored in the fourth NVM area to invalid data that cannot be obtained.

15. A file system metadata management apparatus, wherein the apparatus comprises a memory and a processor, the memory stores code, the processor is configured to execute the code, and when the code is executed, the apparatus performs the method according to any one of claims 1 to 7.

16. A computer storage medium, wherein the computer storage medium stores one or more instructions, and when the instructions are executed by one or more computers, the one or more computers are enabled to perform the method according to any one of claims 1 to 7.

17. A computer program product, wherein the computer program product stores instructions, and when the instructions are executed by a computer, the computer is enabled to perform the method according to any one of claims 1 to 7.
